# EUROPEAN PATENT SPECIFICATION

(11) **EP 0 716 124 B1**
(45) Date of publication and mention of the grant of the patent: **09.06.1999**
(21) Application number: 95203106.0
(22) Date of filing: 14.11.1995
(51) Int. Cl.: C08L 53/00, C08L 23/02

(54) **Use of hydrogenated poly (butadiene) block copolymer comprising polymer blends as a chemical resistant composition**
Hydrierte Polybutadien-Blockcopolymer enthaltende Polymermischungen
Mélanges de polymères comprenant un copolymère bloc de polybutadiène hydrogéné

(30) Priority: 16.11.1994 EP 94308453
(43) Date of publication of application: 12.06.1996
(73) Proprietor: SHELL INTERNATIONALE RESEARCH MAATSCHAPPIJ B.V., 2596 HR Den Haag (NL)
(72) Inventor: Marks, Nicolaas, B-1348 Ottignies Louvain-la-Neuve (BE); Vermeire, Hans Ferdinand, B-1348 Ottignies Louvain-la-Neuve (BE)

(56) References cited:
- EP-A- 0 387 947
- EP-A- 0 409 580
- EP-A- 0 676 425
- WO-A-95/00566
- US-A- 4 252 914

## Description

The present invention relates to the use of blends comprising as a main ingredient a hydrogenated poly(butadiene) block copolymer and as another ingredient a poly(olefin) homopolymer or copolymer as a chemical resistant composition.

From US patents Nos. 4,237,245 and 4,252,914 blends were known of alpha-olefins polymers and hydrogenated di-block copolymers, comprising one block predominantly of 1,4 polybutadiene and containing no more than 15 wt% of 1,2 microstructure, and a second block of 1,2 polybutadiene containing at least 95 wt% of 1,2-microstructure, the molecular weight of said 1,2-polybutadiene block representing at least 10% of the total molecular weight of said copolymer, and wherein the unsaturation in said original diblock copolymer being at least 85% hydrogenated.

Moreover, in particular according to the teachings of US patent no. 4,252,914, blends comprising from 10 to 60 wt% of poly(alpha-olefin) and preferably from 15 to 48 wt%, and from 90 to 40 wt% of hydrogenated poly(butadiene) block copolymers, which previously may be partially cured, were primarily intended to be used.

Although said blends were mentioned to show improved mechanical properties such as impact strength at low temperatures minimum creep at high temperatures, elongation tensile strength and tear strength, no reference was made at all to the chemical resistance of such blends.

Said chemical resistance of polymer blends comprising as a main ingredient poly(olefin), has become in particular important in automotives, due to increasing application of such polymer blends under the bonnet, increasing the potential risk of being in contact with chemical reagents such as hydrocarbon fuel, grease, lube oil, polyols, and concentrated strong inorganic acids such as sulphuric acid, and in industrial processes involved with organic solvents, grease, oils, fats, polyols and strong inorganic acids.

It will be appreciated that there is presently a strong need for polymer blends of poly(olefin) and another polymer which may improve the combination of all relevant mechanical properties and the chemical resistance, in potentially contaminated environments. More in particular, the resistance of such blends against mineral oils of an aromatic type had to be improved. Therefore, an object of the present invention was to provide polymer blends, which show an improved combination of mechanical properties and of chemical resistance, and which moreover could be easily processed into the finally desired formed articles.

As a result of extensive research and experimentation there have been surprisingly found now such blends aimed at.

Accordingly the present invention relates to use of a chemical resistant composition comprising at least:
(a) 100 parts by weight of a hydrogenated (poly)butadiene block copolymer BDB or [B¹E]ₙX, wherein each of the blocks B and B¹ comprises a substantially linear, substantially pure polyethylene block, having a number average molecular weight (Mn) in the range of from 5,000 to 250,000; D and E are substantially linear elastomeric polymer blocks, being substantially free from olefinic unsaturation, and having a number average molecular weight in the range of from 10,000 to 400,000, the molecular weight distribution (Mw/Mn) of the blocks B, BD, BDB, B¹ and B¹E is ≤ 2, and wherein X is a coupling agent residue and n is an integer ≥ 2;
(b) from 20 to 100 parts by weight of a predominantly paraffinic and/or naphthenic extender oil; and
(c) from 20 to 200 parts by weight of a homopolymer or copolymer of olefins having from 2 to 20 carbon atoms, as a chemical resistant composition.

More in particular in the polymer blends, the respective herein beforementioned ingredients are occurring in amounts corresponding with
(a) from 10 to 50 wt%
(b) from 5 to 40 wt%
(c) from 10 to 60 wt%,
relative to the weight of the total composition under the proviso that the sum of the selected percentages of ingredients (a), (b) and (c) must be 100%.

The blocks B and B¹ preferably have number average molecular weights in the range of from 20,000 to 60,000 and more preferably from 30,000 to 50,000, and the weight fraction of the blocks B, and B¹ in the total block copolymer normally is in the range of from 20 to 80 wt%.

The preferred weight fraction of the blocks B and B¹ in the complete block copolymers applied, is in the range of from 30 to 50 wt%.

The blocks D and E preferably have number average molecular weights in the range of from 80,000 to 180,000 and more preferably from 100,000 to 160,000.

Suitable precursor block copolymers, which should lead to the block copolymers to be used as ingredient (a) of the specified blends, show, before the hydrogenation of known proceseses, a vinyl content in the end blocks of at most 10% and vinyl content in the midblock of from 30 to 70% and preferably from 30 to 50%.

With the term "predominantly paraffinic or naphthenic extender oil" as used throughout the present specification, are meant extender oils, which comprise as main ingredient a paraffinic and/or naphthenic oil, and as optional minor constituents (<5% by weight relative to the total oil weight) aromatic oils.

It will be appreciated that the selection of extender oils has been found to be less critical as compared with corresponding polymer blends of the prior art, where the use of small amounts of aromatic oils had strictly to be avoided due to expected deterioration of blend properties.

Various plasticizing oils are useful as extender in the compositions to be used according to the present invention.

Plasticizing oils which have been found useful include petroleum derived oils, olefin oligomers, and low molecular weight polymers, as well as vegetable and animal oils (which may be employed as relatively high boiling materials), containing only a minor proportion of aromatic hydrocarbons, preferably less than 20% and more preferably less than 10% by weight of the oil. Most preferably the oil may be totally non-aromatic.

The oligomers may be a poly(α-olefin) such as poly(propylene), poly(butylene), poly(dodecene), hydrogenated poly(isoprene), hydrogenated poly(butadiene), hydrogenated poly(piperylene) and hydrogenated copolymers of piperylene and isoprene, having average molecular weights between 350 and 10,000.

Vegetable and animal oils include glyceryl esters of the usual fatty acids and polymerization products thereof.

Examples of a preferred paraffinic oil are PRIMOL 352 and ONDINA 100(PRIMOL and ONDINA are trademarks) and the NAPVIS, HYVIS and ETHYLFLO poplyolefins, having a molecular weight in the range of from 500 to 6,000, (NAPVIS, HYVIS and ETHYLFLO are trademarks).

Preferably paraffinic oil or poly(alpha-olefin) is used as the ingredient (b).

Poly(olefins) to be used as component (c) of the blends to be used in the present invention, comprise homopolymers of alpha-olefin monomers having from 2 to 20 carbon atoms and also copolymers of two or more of said alpha-olefins, which polymers have a melting point of at least 90°C.

The content of poly(alpha-olefin) polymer ingredient (c)in the blend is preferably from 15 to 50% by weight based on the total weight of the three ingredients.

Typical alpha-olefin monomers that may be used in the manufacture of alpha-olefin polymers include ethylene, propylene, 1-butene, 1-pentene, 1-hexene, 1-octene, 4-methyl-1-hexene, 4-ethyl-hexene or 6-methyl-1-heptane.

More preferred poly(alpha-olefin) polymers to be used are polyethylene (HDPE, LLDPE), polypropylene homopolymers, and copolymers of propylene and ethylene.

It will be appreciated that the polymer blends comprising the main ingredients (a), (b) and (c) may comprise in addition one or more auxiliaries such as fillers and stabilizers.

Fillers in general consisting of inorganic fibres or powders can be applied in amounts of from 10 to 50 wt% relative to the weight of the total composition. Preferably calcium carbonate or talc are used as fillers.

The usual stabilizers can be used in amounts up to 1% by weight, relative to the weight of the total composition.

It will be appreciated that the present polymer blends were found to have a surprisingly improved chemical resistance and in particular an improved resistance against aromatic type mineral oils and mineral strong acids, whereas the resistance against alcohols, carboxylic acids, fats of animal or vegetable origin, and most industrially applied detergents is maintained or slightly improved as compared to the conventional prior art blends, comprising hydrogenated block copolymers, containing terminal poly(vinyl aromatic) blocks and more in particular poly(styrene) as constituent, such as KRATON 1651 G block copolymer (SEBS). The improved resistance against aromatic extender oil fractions also means that the use of industrial naphthenic oils which are known to contain normally minor amount of such aromatic components, will be less critical and safer.

It was moreover surprisingly found that in the hereinbefore specified polymer blends, comprising components (a), (b) and (c) there was no anisotropy in respect of the tensile strength, elongation at break and tear strength, contrary to blends comprising conventional block copolymer constituent, and that the meltflow of the blends comprising the ingredients (a), (b) and (c) has been significantly improved.

Although the polymers to be used as ingredient (a) in the blends to be used in the present invention were in principle known from the European Patent Application No. 0 387,947 or 0 409,580 there could not be found any reference by a person skilled in the art to the presently found chemical resistance of the specified blends.

The invention is further illustrated by the following examples.

### Examples

Blends were prepared from (a) 100 parts by weight of a hydrogenated (poly)butadiene triblock copolymer BDB, having an end block content of 40%, an endblock vinyl content before hydrogenation <10%, a midblock vinyl content before hydrogenation of 40%, endblock molecular weight 40,000, midblock apparent molecular weight 120,000, total molecular weight 200,000, coupling efficiency >80%, and 100 parts by weight of selectively hydrogenated block triblock copolymer of styrene and butadiene (KRATON G 1651) having a polystyrene endblock apparent molecular weight of 29,000, and a polystyrene content of 33%, and (b) 100 parts by weight of a paraffinic oil; (PRIMOL 352), and
(c) 34 parts by weight of polypropylene homopolymer.

The relevant properties at the time of initial testing (initial properties) and the properties after 168 hours ageing at 23°C and 70°C respectively, have been listed in the subsequent Table I.

### Table I

Test Data of KRATON G - 1651 and BDB Blends

| **Initial Properties** | | | | | |
|---|---|---|---|---|---|
| Polymer Type | | G-1651 | | BDB | |
| Moulding direction | | MD | PMD | MD | PMD |
| Tensile strength, | MPa | 3.5 | 10.9 | 16.1 | 16.1 |
| Modulus 300%, | MPa | 3.4 | 2.3 | 4.2 | 2.7 |
| Elongation a/b, | % | 420 | 800 | 1000 | 100 |
| Tear strength, | kN/m | 22 | 28 | 38 | 39 |
| CS 23°/lw , | % | 30 | | 22 | |
| CS 70°C/lw, | % | 52 | | 49 | |
| CS 100°C/lw, | % | 73 | | 80 | |
| Shore A, hardness | - | 59 | | 66 | |
| MFR type "G" | g/10' | 0.5 | | 23 | |
| Resilience, | % | 58 | | 56 | |
| DIN abrasion, | mm³ | 92 | | 105 | |
| Weight loss 70°C/3w | % | 3 | | 3 | |
| Weight loss 100°C/3w | % | 3 | | 3 | |
| Density | Mg/m³ | 0.90 | | 0.89 | |

| **After 168 hours Heat Aging,** | | | | | | | |
|---|---|---|---|---|---|---|---|
| Polymer base | | G-1651 | | | BDB | | |
| Test temperature | °C, | 70 | 70 | 100 | 70 | 70 | 100 |
| Mould direction | | MD | PMD | MD | MD | PMD | MD |
| Tesnile strength, | Mpa | 3.6 | 12.0 | 3.6 | 16.1 | 15.8 | 16.6 |
| Modulus 300% | Mpa | 3.6 | 2.4 | 3.7 | 4.5 | 2.8 | 4.3 |
| Elongation a/b, | % | 350 | 750 | 300 | 1000 | 1000 | 1000 |
| Tear strength, | kN/m | 23 | 28 | 23 | 38 | 38 | 37 |
| Shore A | - | 59 | | 59 | 66 | | 66 |

| **ASTM Oil # 3 resistance** | | | | | | |
|---|---|---|---|---|---|---|
| Property | TS | Eb | Swell % | TS % | Eb | Swell % |
| | % Retention | | | Retention | | |

| **Temperature, 23°C** | | | | | | |
|---|---|---|---|---|---|---|
| 22 hours | 72 | 69 | 28 | 94 | 109 | 15 |
| 1 week | 73 | 55 | 64 | 91 | 108 | 27 |
| 2 weeks | 65 | 61 | 76 | 79 | 105 | 26 |
| 3 weeks | Not determinable | | | 82 | 113 | 24 |

| **Temperature, 70°C** | | | | | | |
|---|---|---|---|---|---|---|
| 22 hours | 38 | 148 | 148 | 63 | 108 | 63 |
| 1 week | Not determinable | | | 80 | 107 | 65 |
| 2 weeks | Not determinable | | | 72 | 107 | 67 |
| 3 weeks | Not determinable | | | 72 | 110 | 69 |

## Claims

1. Use of a composition comprising at least:
(a) 100 parts by weight of a hydrogenated (poly)butadiene block copolymer BDB or [B¹E]n^{X}, wherein each of the blocks B and B¹ comprises a substantially linear, substantially pure polyethylene block, having a number average molecular weight (Mn) in the range of from 5,000 to 250,000; D and E are substantially linear elastomeric polymer blocks, being substantially free from olefinic unsaturation, and having a number average molecular weight in the range of form 10,000 to 400 000, the molecular weight distribution (Mw/Mn) of the blocks B, BD, BDB, B¹ and B¹E is ≤ 2, and wherein X is a coupling agent residue and n is an integer > 2;
b) from 20 to 100 parts by weight of a predominately paraffinic and/or napththenic extender oil; and
(c) from 20 to 200 parts by weight of a homopolymer or copolymer of olefins having from 2 to 20 carbon atoms, as a chemical resistant composition.

2. Use according to claim 1, characterized in that the ingredients (a), (b) and (c) are occurring in amounts corresponding with
(a) from 10 to 50wt%
(b) from 5 to 40 wt%
(c) from 10 to 60 wt%
relative to the weight of the total composition under the proviso that the sum of the selected percentages of the ingredients (a), (b) and (c) must be 100%.

3. Use according to claims 1 or 2, characterized in that the blocks B and B¹ each have a number average molecular weight in the range of from 20,000 to 60,000.

4. Use according to claim 3, characterized in that the blocks B and B¹ each have a number average molecular weight in the range of from 30,000 to 50,000.

5. Use according to any one of claims 1 to 4, characterized in that the weight fraction of the blocks B and B¹ in the total block copolyner is in the range of from 20 to 80wt%.

6. Use according to claim 5, characterized in that the, weight fraction of the blocks B and B¹ in the total block copolymer is in the range of from 30 wt% to 50 wt%.

7. Use according to any one of claims 1-6, characterized in that the blocks D and E each have a number average molecular weight in the range of from 80,000 - 180,000.

8. Use according to claim 7, characterized in that the blocks D and E each have a number average molecular weight in the range of from 100,000 to 160,000.

9. Use according to any one of claims 1-8, characterized in that the blocks B and B¹ in the precursor block copolymer for ingredient (a) before hydrogenation, show a vinyl content of at most 10% and the blocks D and E a vinyl content from 30 to 70%.

10. Use according to any one of claims 1 - 9, characterized in that as ingredient (b) paraffin oil or poly (alpha olefin) is used.

11. Use according to any one of claims 1-9 characterized in that the ingredient (c) is a poly alpha (olefin) having a melting point of at least 90°C.

12. Use according to any one of claims 1-11, characterized in that the content of ingredient (c) is in the range of from 15 to 50 wt% based on the total weight of three ingredients.

13. Use according to any one of claims 1-12, characterized in that the ingredient (c) is selected from polyethylene, poly(propylene) homopolymer, and copolymers of propylene and ethylene.

14. Use according to any one of claims 1-13, as a chemical resistant composition in automotive cars.

## Patentansprüche

1. Verwendung einer Zusammensetzung, die mindestens
(a) 100 Gewichtsteile eines hydrierten (Poly)butadienblockcopolymers BDB oder [B¹E]ₙX, worin jeder der Blöcke B und B¹ eine im wesentlichen linearen, im wesentlichen reinen Polyethylenblock mit einem zahlenmittleren Molekulargewicht (Mn) im Bereich von 5.000 bis 250.000 bedeutet; D und E im wesentlichen lineare elastomere Polymerblöcke darstellen, die im wesentlichen frei von olefinischer Unsättigung sind und ein zahlenmittleres Molekulargewicht im Bereich von 10.000 bis 400.000 aufweisen, wobei die Molekulargewichtsverteilung (Mw/Mn) der Blöcke B, BD, BDB, B¹ und B¹E den Wert ≤ 2 hat und worin X einen Kupplungsmittelrest darstellt und n eine ganze Zahl ≥ 2 ist;
(b) 20 bis 100 Gewichtsteile eines überwiegend paraffinischen und/oder naphthenischen Strecköls; und
(c) 20 bis 200 Gewichtsteile eines Homopolymers oder Copolymers von Olefinen mit 2 bis 20 Kohlenstoffatomen umfaßt,
als eine chemisch beständige Zusammensetzung.

2. Verwendung nach Anspruch 1, dadurch gekennzeichnet, daß die Komponenten (a), (b) und (c) in Mengen vorliegen, die mit
(a) von 10 bis 50 Gew.-%,
(b) von 5 bis 40 Gew.-% und
(c) von 10 bis 60 Gew.-%
übereinstimmen, bezogen auf das Gewicht der Gesamtzusammensetzung, mit der Maßgabe, daß die Summe der ausgewählten Prozentsäzte der Komponenten (a), (b) und (c) 100 % betragen muß.

3. Verwendung nach den Ansprüchen 1 oder 2, dadurch gekennzeichnet, daß die Blöcke B und B¹ jeweils ein zahlenmittleres Molekulargewicht von 20.000 bis 60.000 aufweisen.

4. Verwendung nach Anspruch 3, dadurch gekennzeichnet, daß die Blöcke B und B¹ jeweils ein zahlenmittleres Molekulargewicht im Bereich von 30.000 bis 50.000 aufweisen.

5. Verwendung nach einem der Ansprüche 1 bis 4, dadurch gekennzeichnet, daß der Gewichtsanteil der Blöcke B und B¹ im Gesamtblockcopolymer im Bereich von 20 bis 80 Gew.-% liegt.

6. Verwendung nach Anspruch 5, dadurch gekennzeichnet, daß der Gewichtsanteil der Blöcke B und B¹ im Gesamtblockcopolymer im Bereich von 30 Gew.-% bis 50 Gew.-% liegt.

7. Verwendung nach einem der Ansprüche 1 bis 6, dadurch gekennzeichnet, daß die Blöcke D und E jeweils ein zahlenmittleres Molekulargewicht im Bereich von 80.000 bis 180.000 aufweisen.

8. Verwendung nach Anspruch 7, dadurch gekennzeichnet, daß die Blöcke D und E jeweils ein zahlenmittleres Molekulargewicht im Bereich von 100.000 bis 160.000 aufweisen.

9. Verwendung nach einem der Ansprüche 1 bis 8, dadurch gekennzeichnet, daß die Blöcke B und B¹ im Vorläuferblockcopolymer für Komponente (a) vor der Hydrierung einen Vinylgehalt von höchstens 10 % aufweisen und die Blöcke D und E einen Vinylgehalt von 30 bis 70 % haben.

10. Verwendung nach einem der Ansprüche 1 bis 9, dadurch gekennzeichnet. daß als Komponente (b) Paraffinöl oder Poly(alpha-olefin) verwendet wird.

11. Verwendung nach einem der Ansprüche 1 bis 9, dadurch gekennzeichnet, daß die Komponente (c) ein Poly(alpha-olefin) mit einem Schmelzpunkt von wenigstens 90°C ist.

12. Verwendung nach einem der Ansprüche 1 bis 11, dadurch gekennzeichnet, daß der Anteil der Komponente (c) im Bereich von 15 bis 50 Gew.-%, bezogen auf das Gesamtgewicht der drei Komponenten, liegt.

13. Verwendung nach einem der Ansprüche 1 bis 12, dadurch gekennzeichnet, daß die Komponente (c) unter Polyethylen, Poly (propylen)homopolymer und unter Copolymeren aus Propylen und Ethylen ausgewählt ist.

14. Verwendung nach einem der Ansprüche 1 bis 13 als eine chemisch beständige Zusammensetzung in Kraftfahrzeugen.

## Revendications

1. Utilisation d'une composition comprenant au moins :
(a) 100 parties en poids d'un copolymère bloc de (poly)butadiéne hydrogéné BDB ou [B¹E]ₙX, dans lequel chacun des blocs B et B¹ comprend un bloc de polyéthylène essentiellement pur, essentiellement linéaire, ayant un poids moléculaire moyen numérique (Mn) dans la gamme de 5.000 à 250.000, D et E sont des blocs de polymère élastomères essentiellement linéaires, étant essentiellement exempts d'insaturation oléfinique, et ayant un poids moléculaire moyen numérique dans la gamme de 10.000 à 400.000, la distribution de poids moléculaires (Mw/Mn) des blocs B, BD, BDB, B¹ et B¹E est ≤ 2, et dans lequel X est un reste d'agent de couplage et n est un nombre entier > 2;
(b) de 20 à 100 parties en poids d'une huile diluante principalement paraffinique et/ou naphténique; et
(c) de 20 à 200 parties en poids d'un homopolymère ou copolymère d'oléfines comportant de 2 à 20 atomes de carbone, à titre de composition résistante aux attaques chimiques.

2. Utilisation suivant la revendication 1, caractérisée en ce que les ingrédients (a), (b) et (c) apparaissent en des quantités correspondant à :
(a) de 10 à 50 % en poids,
(b) de 5 à 40 % en poids,
(c) de 10 à 60 % en poids,
par rapport au poids de la composition totale à la condition que la somme des pourcentages choisis d'ingrédients (a), (b) et (c) soit égale à 100 %.

3. Utilisation suivant l'une ou l'autre des revendications 1 et 2, caractérisée en ce que les blocs B et B¹ ont chacun un poids moléculaire moyen numérique dans la gamme de 20.000 à 60.000.

4. Utilisation suivant la revendication 3, caractérisée en ce que les blocs B et B¹ ont chacun un poids moléculaire moyen numérique dans la gamme de 30.000 à 50.000.

5. Utilisation suivant l'une quelconque des revendications 1 à 4, caractérisée en ce que la fraction pondérale des blocs B et B¹ dans le copolymère bloc total se situe dans la gamme de 20 à 80 % en poids.

6. Utilisation suivant la revendication 5, caractérisée en ce que la fraction pondérale des blocs B et B¹ dans le copolymère bloc total se situe dans la gamme de 30 % en poids à 50 % en poids.

7. Utilisation suivant l'une quelconque des revendications 1 à 6, caractérisée en ce que les blocs D et E ont chacun un poids moléculaire moyen numérique dans la gamme de 80.000-180.000.

8. Utilisation suivant la revendication 7, caractérisée en ce que les blocs D et E ont chacun un poids moléculaire moyen numérique dans la gamme de 100.000 à 160.000.

9. Utilisation suivant l'une quelconque des revendications 1 à 8, caractérisée en ce que les blocs B et B¹ dans le copolymère bloc précurseur pour l'ingrédient (a) avant hydrogénation, montrent une teneur en vinyle de tout au plus 10 % et les blocs D et E ont une teneur en vinyle de 30 à 70 %.

10. Utilisation suivant l'une quelconque des revendications 1 à 9, caractérisée en ce qu'on utilise comme ingrédient (b) une huile paraffinique ou poly(alpha-oléfine).

11. Utilisation suivant l'une quelconque des revendications 1 à 9, caractérisée en ce que l'ingrédient (c) est une poly(alpha-oléfine) ayant un point de fusion d'au moins 90°C.

12. Utilisation suivant l'une quelconque des revendications 1 à 11, caractérisée en ce que la teneur en ingrédient (c) se situe dans la gamme de 15 à 50 % en poids par rapport au poids total des trois ingrédients.

13. Utilisation suivant l'une quelconque des revendications 1 à 12, caractérisée en ce que l'ingrédient (c) est choisi parmi le polyéthylène, un homopolymère de poly(propylène) et les copolymères de propylène et d'éthylène.

14. Utilisation suivant l'une quelconque des revendications 1 à 13, sous la forme d'une composition résistante aux attaques chimiques dans des voitures automobiles.
